# EUROPÄISCHE PATENTSCHRIFT

(11) **EP 2 928 619 B1**
(45) Veröffentlichungstag und Bekanntmachung des Hinweises auf die Patenterteilung: **01.09.2021**
(21) Anmeldenummer: 13817878.5
(22) Anmeldetag: 05.12.2013
(51) Int. Cl.: B08B 3/00, B08B 9/043, B08B 9/045, F16D 3/26, F16L 27/047, F16L 27/053

(54) **SPÜLSCHLAUCHGELENK, SPÜLSCHLAUCHDREHVORRICHTUNG UND SPÜLDÜSE**
FLUSHING JOINT, FLUSHING HEAD AND FLUSHING DEVICE
JOINT DE RINÇAGE ,TÊTE DE RINÇAGE ET DISPOSITIF DE RINÇAGE

(30) Priorität: 10.12.2012 DE 202012011773 U
(43) Veröffentlichungstag der Anmeldung: 14.10.2015
(73) Patentinhaber: P&W Umwelttechnik GmbH, 26524 Hage (DE)
(72) Erfinder: PLÄSIER, Arnold, 26506 Norden-Leegemoor (DE); WENK, Christoph, 26524 Hage (DE); VAN DÜLLEN, Udo, 26524 Hage (DE)
(74) Vertreter: Busse & Busse
(86) Internationale Anmeldenummer: PCT/EP2013/003671
(87) Internationale Veröffentlichungsnummer: WO 2014/090384

(56) Entgegenhaltungen:
- WO-A2-2011/104021
- DE-C- 634 820
- US-A- 979 513
- US-A- 2 921 803
- US-A- 2 934 920
- None

## Beschreibung

Die vorliegende Erfindung betrifft ein Spülschlauchgelenk zur drehmomentübertragenden, gelenkigen Anbindung eines ein Gehäuse aufweisenden Spülschlauchfunktionselement wie einer Spülschlauchdrehvorrichtung oder einer Spüldüse an einen insbesondere als Spülschlauchflansch ausgebildeten Flansch, wobei das Spülschlauchgelenk einen Strömungskanal ausbildet.

Aus der WO 2011/104021 A2 ist eine Spüldüse bekannt, die gelenkig an einen Spülschlauch angeschlossen ist und ein Gelenk nach dem Oberbegriff des Anspruchs 1 aufweist. Die dort beschriebene Gelenkkonstruktion ist vergleichsweise aufwendig zu montieren.

Aus der DE 634 820 C ist eine gelenkige Rohrverbindung, insbesondere für Eisenbahnfahrzeuge, zur Führung eines Dampfstroms zu entnehmen, bei der eine gelenkige Rohrverbindung zwischen kugelschichtförmigen Teilen einer Heizrohrkupplung aus einem oder mehreren Stiften in einem der kugelförmigen Ansätze und aus entsprechenden Schlitzen in dem anderen eine gelenkige aber verdrehsichere Verbindung herstellen.

Als Aufgabe der vorliegenden Erfindung kann angesehen werden, ein einfacher aufgebautes Spülschlauchgelenk zu schaffen.

Die Aufgabe wird gelöst durch einen Gegenstand gemäß Anspruch 1. Vorteilhafte Weiterbildungen der Erfindung sind den auf diesen Anspruch rückbezogenen Ansprüchen sowie der nachfolgenden Beschreibung zu entnehmen.

Erfindungsgemäß ist vorgesehen, dass das Spülschlauchgelenk ein Bolzenelement und ein Halteelement aufweist, von denen eines gehäuseseitig und eines flanschseitig festgelegt oder festzulegen ist, wobei das Halteelement zwar mit ihren Oberflächen zueinander hingerichtete Teilbereiche aufweist, zwischen denen ein eine Längsachse aufweisender, mit einer senkrecht zur Längsachse betrachtet zumindest teilweise gekrümmten Außenkontur versehener, zylinderförmiger Teil des Bolzenelements dergestalt gelagert ist, dass zwischen Halte- und Bolzenelement ein Drehmoment übertragbar ist.

Die drehmomentübertragenden Teile werden gegenüber dem Stand der Technik in den Strömungskanal hinein verlagert, so dass sie zu Montagezwecken besser zugänglich sind. Darüber hinaus ist durch die einfache Ausbildung eines gabelförmigen, zwei einen Spalt zur Aufnahme des Bolzenelements umfassende Teilbereiche aufweisenden Halteelements eine Einstecklösung realisierbar, bei der die beiden Gelenkteile bei der Montage ineinander gesteckt werden können. Hierbei kann das Halteelement gehäuseseitig festgelegt, z.B. verpresst sein und das Bolzenelement kann in den Spalt eingeschoben werden. Die einander gegenüberliegenden Innenseiten des Spalts bilden die Teilbereiche auf, zwischen deren Oberflächen das Bolzenelement aufzunehmen ist. Alternativ kann bei einer Version, bei der das Halteelement mit einem Langloch versehen ist, das Halteelement mit dem durch geführten Bolzen über diesen an z.B. der Flanschseite befestigt sein und kann dann bei Anbringen des Flansches an dem Gehäuse einfach in eine zugehörige Ausnehmung des Gehäuses eingeschoben oder über Zug an dem Bolzenelement aus dem Gehäuse herausgezogen werden. Dies ist insbesondere für Demontage- oder Montagezwecke vorteilhaft. Generell gilt, dass für den Betriebsfall der flanschseitige Teil mit dem gehäuseseitigen Teil zu verbinden ist.

Die Außenkontur des Bolzenelements ist dergestalt gekrümmt, dass die mit zueinander hingerichteten Oberflächen versehenen Teilbereiche entlang der Krümmung um die Längsachse des Bolzenelements herumbewegt werden können und auch in der verschwenkten Stellung noch ein Drehmoment von dem Bolzenelement auf das Halteelement oder umgekehrt übertragbar ist. Das Bolzenelement weist einen eine Längsachse aufweisenden zylinderförmigen Teil auf, der zwischen den zwei mit ihren Oberflächen zueinander hingerichteten Teilbereichen des Halteelements um seine Längsachse schwenkbar gelagert ist. In einer verschwenkten Position ist ein Drehmoment zwischen Halte- und Bolzenelement übertragbar. Vorzugsweise ist das Bolzenelement zylinderförmig.

Die beiden Elemente Halteelement und Bolzenelement liegen dicht, insbesondere spielfrei und vorzugsweise formschlüssig und unter Ausbildung zumindest zweier Verbindungslinien, die nicht nur senkrecht zur Längsachse des Bolzenelements liegen können, aneinander, so dass ein Drehmoment gut übertragen werden kann.

Zur Ausbildung eines Gelenks mit einem Freiheitsgrad weist das Halteelement in einer vorteilhaften Weiterbildung einen kreisförmigen Durchgang für das Bolzenelement auf. Hierbei sind die einander zugewandten Oberflächen Teil der Innenseite des Durchgangs und bilden mit der Außenseite des Bolzenelements ein Gleitlager aus. Mantelfläche des Bolzenelements und Innenfläche des Durchgangs liegen dicht, insbesondere spielfrei und formschlüssig aneinander.

Unabhängig von der Ausbildung eines Gleitlagers ist es von Vorteil, dass das Halteelement um die Längsachse des Bolzenelements verschwenkbar ist, wobei auch in der Verschwenkposition zwischen Halte- und Bolzenelement ein Drehmoment übertragbar ist. In einer nicht erfindungsgemäßen Ausführungsform kann das Bolzenelement im Querschnitt senkrecht zur Längsachse auch unterschiedliche Krümmungen der Außenkontur, z.B. einen tropfenförmigen Querschnitt, aufweisen, um beispielsweise eine Verschwenkung durch Ausbildung eines Anschlags zu begrenzen. Gleichzeitig kann eine solche Form strömungsgünstig sein und den Strömungswiderstand des im Wasserdurchgang angeordneten Gelenks verringern.

Das Halteelement ist gabelförmig ausgebildet oder bildet einen Durchgang nach Art eines Langlochs aus.

Bei solcher Art ausgebildeten Halteelementen ist es von Vorteil, dass das Halteelement um eine zwischen den Oberflächen und senkrecht zur Längsachse ausgebildete Schwenkachse schwenkbar ist, wobei in der Verschwenkposition zwischen Halte- und Bolzenelement ein Drehmoment übertragbar ist. Das entsprechende Gelenk weist somit zwei Freiheitsgrade auf und kann dennoch ein Drehmoment übertragen. Insbesondere liegen Bolzen- und das Halteelement auf jeder Oberflächenseite formschlüssig aneinander an und bilden zwei Verbindungslinien aus. Sofern die beiden Elemente mit Spiel aneinander festgelegt sind, werden nicht zwei Verbindungslinien ausgebildet, vielmehr kommt es im Falle einer Verschwenkung um eine senkrecht zur Längsachse des Bolzenelements ausgebildeten Schwenkachse um eine Verkantung der beiden Teile gegeneinander, so dass dennoch ein Drehmoment übertragen wird.

Vorteilhafterweise weist das Halteelement eine gehäuse- oder flanschseitig festzulegende Basis mit beidseitig des Strömungskanals festzulegenden Befestigungsbereichen auf, so dass ein Drehmoment bezüglich einer Drehachse, die der Längsmittelachse des Gelenks entspricht auf beiden Seiten gut abgestützt bzw. eingeleitet werden kann. Das Halteelement, welches als Verdrehstütze wirkt, kann somit einerseits sowohl im Bereich des Bolzenelements, andererseits auch im Bereich der Basis gabelförmig ausgebildet sein. Darüber hinaus kann die Verdrehstütze zwecks besserer Abstützung im Gehäuse oder Flansch zwischen Basis und Haltebereich Verbreiterungen aufweisen, die wie zumindest Teile der Basis in entsprechenden Ausnehmungen insbesondere des Gehäuses verpresst oder eingeschoben werden können.

Das Halteelement weist zur Reduzierung einer Verwirbelung des Spülwassers vorzugsweise gebogene oder gekrümmte Anströmbereiche auf und ist somit strömungsmäßig optimiert. Auch das Bolzenelement kann strömungsmäßig optimiert werden und beispielsweise eine im Querschnitt betrachtet angenähert tropfenförmige Form zumindest in den Bereichen aufweisen, in denen das Halteelement nicht angreifen kann.

Eines der beiden Elemente von Bolzen- oder Halteelement ist in einem hohlkugelschichtförmigen Halter angeordnet.

Bei diesem handelt es sich somit um einen Halter, dessen Grundform (mit Ausnahme z.B. von Befestigungspunkten, Flanschanschlüssen oder dgl.) die Form einer Hohlkugel mit abgeschnittenen Enden ausbildet. Durch diese offenen Enden kann das Wasser durch die Hohlkugelschicht strömen. Durch diese Form kann der Halter einerseits einen zentralen Strömungskanal ausbilden, andererseits eine gute Dichtung nach außen hin ermöglichen. Hierzu ist beispielsweise bei einer Anordnung des hohlkugelschichtförmigen Halters auf Seiten des Flansches gehäuseseitig eine mit geringfügig größerem Innenradius versehene entsprechende Anlagefläche vorgesehen, so dass sich unter Wasserdruck der Halter in diese einpressen kann und somit einen Dichtschluss bewirkt. Bei einer solchen, eine Innenseite einer Hohlkugelschicht aufweisenden Gehäuseoberfläche ergibt sich aufgrund der leicht unterschiedlichen Radien eine dichtende Verbindungslinie bzw. ein kreisrunder Dichtschluss auch in unterschiedlichen Schwenkzuständen. Hierbei kann es vorteilhaft hinsichtlich der Beweglichkeit des Gelenks sein, wenn der Mittelpunkt der Hohlkugel in dem Bolzenelement liegt.

Vorzugsweise ist darüber hinaus der hohlkugelschichtförmigen Halter mit seiner Außenseite spielbehaftet jedoch für zur Übertragung von Zugkräften geeignet in einem korrespondierenden Gelenkgehäuseteil, vorzugsweise einem Teil des Gehäuses, angeordnet, wobei an diesem Gelenkgehäuseteil das andere der beiden Elementen von Bolzen- oder Halteelement mittelbar oder unmittelbar (gehäusefest) festgelegt ist.

Die vorteilhaft vereinfachte Aufbau eines erfindungsgemäßen Gelenks ist dann erreicht, wenn die gehäuseseitigen Teile, in denen der hohlkugelschichtförmige Halter angeordnet ist, zweiteilig ausgebildet sind. Nach Einbringen des Halters in den ersten Gelenkgehäuseteil und dessen korrespondierende Innenseite kann dann von außen eine vorzugsweise ebenfalls wiederum zweiteilige, innenseitig Anlageflächen für den Halter ausbildende Manschette aufgesetzt werden. Hierüber werden dann die auf ein Spülschlauch auftretenden Zugkräfte auf den Gehäuse- bzw. den Flanschteil übertragen.

Zur Optimierung der Strömung ist der Strömungskanal im Bereich von Bolzen- und Halteelement quer zur Hauptströmungsrichtung betrachtet verbreitert. Hierdurch kann der durch die Anordnung von Bolzen- und Halteelement im Strömungskanal bewirkte Querschnittsverringerung entgegengewirkt werden.

Besonders querschnittsoptimiert ist ein erfindungsgemäßes Spülschlauchgelenk dann, wenn der Strömungskanal quer zu seiner Längsachse betrachtet eine durchströmbare Querschnittsfläche aufweist, die sich im Bereich von Halte- und/oder Bolzenelement gegenüber den Halte- oder/und Bolzenelement freien Strömungskanalbereichen insbesondere in den Bereichen außerhalb der Hohlkugel um nicht mehr als 10% ändert.

Die Aufgabe wird darüber hinaus auch durch einen Spülschlauchdrehvorrichtung gelöst, die ein vor- oder nachbeschriebenes, erfindungsgemäßes Spülschlauchgelenk aufweist.

Entsprechendes gilt auch für eine Spüldüse, die mit einer Kamera versehen sein kann, wobei die Spüldüse mit einem vor- oder nachbeschriebenen, erfindungsgemäßen Spülschlauch-(Dreh-)Gelenk versehen ist.

Weitere Einzelheiten der Erfindung lassen sich der nachfolgenden Figurenbeschreibung entnehmen. In den schematischen Abbildungen der Figuren zeigt:
Fig. 1 einen erfindungsgemäßen Gegenstand in einem Spülschlauch integriert,
Fig. 2 den erfindungsgemäßen Gegenstand nach Fig. 1 in einem Vertikal-schnitt,
Fig. 3 den Gegenstand nach Fig. 1 in einer teilweisen geschnittenen, perspektivischen Ansicht,
Fig. 4a bis c Teile eines erfindungsgemäßen Gegenstands in alternativen Ausführungsformen.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

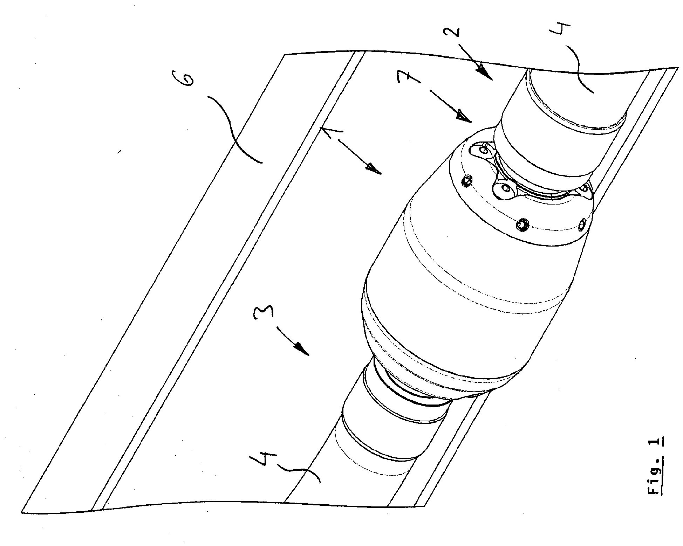

In Fig. 1 ist eine erfindungsgemäße Spülschlauchdrehvorrichtung 1 gezeigt, die auf einer stromaufwärts liegenden Seite, d.h. zu der Richtung hin, aus der das Wasser durch den Schlauch gepresst wird, über einen Flansch 2 und auf einer stromabwärts liegenden Seite über einen Flansch 3 jeweils an Spülschlauchteilstücken 4 angeordnet ist. Die Vorrichtung 1 ist in der Figur in einem nicht zur Erfindung gehörenden Rohr 6 angeordnet, welches aufgeschnitten dargestellt ist und bei dem es sich beispielsweise um einen Abwasserkanals eines Hauses handeln kann.

Ein erfindungsgemäßes Spülschlauchgelenk 7 führt zu einer gelenkigen Anbindung der Drehvorrichtung 1 an den stromaufwärts befindlichen Spülschlauchteil 4.

Auf der stromabwärts gelegenen Seite der Drehvorrichtung 1 kann ebenfalls ein erfindungsgemäßes Gelenk zwecks Anbindung des Spülschlauches an den Flansch 3 vorhanden sein.

Der Flansch 2 umfasst eine Schelle 8 und einen Halter 9, auf dem eine Manschette 12 angeordnet ist. Zwischen Halter 9 und Schelle 8 ist der Spülschlauch eingepresst. Halter 9 ist Teil des Flansches 2 und weist eine Außenseite 10 auf.

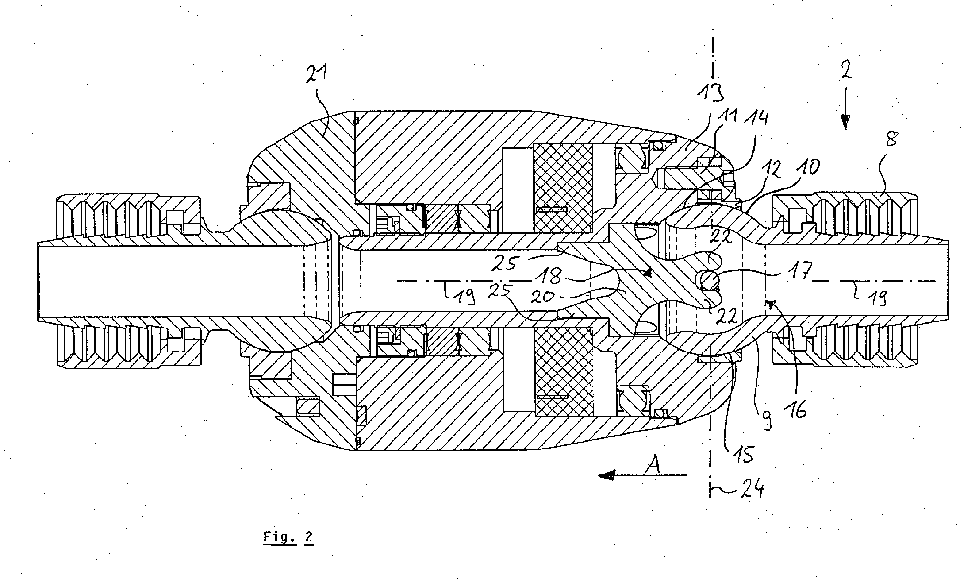

Der in Stromabwärtsrichtung A gelegene hohlkugelschichtförmige Halter ist über die mit im vorliegenden Fall fünf Schrauben 11 versehene Manschette 12 zur Zugkraftübertragung im Gehäuse 13, welches gemeinsam mit der Manschette 12 Teile des Gelenkgehäuses ausbildet, befestigt. Eine der Außenseite des hohlkugelschichtförmigen Teils des Halters 9 zugewandte Innenseite 14 des Gehäuses bildet mit der demselben Halterteil zugewandten Innenseite 15 der Manschette 12 eine korrespondierend ausgebildete Anlagefläche, die eine in der Zeichnung nicht erkennbare, allerdings geringfügig geringere Krümmung als die Außenseite 10 des hohlkugelschichtförmigen Teils des Halters 9 aufweist. Hierdurch ist einerseits der Halter 9 in Richtung der Figurenebene der Fig. 2 von oben nach unten sowie senkrecht dazu aus der Figurenebene heraus beweglich angeordnet. Für den Fall, dass in dem von dem Gelenk ausgebildeten Kanal 16 Wasserdruck ansteht, wird der hohlkugelschichtförmige Teil gegen seine vom Gehäuse inkl. der Manschette gebildete Aufnahme gedrückt und dichtet den Strömungskanal 16 bei gleichzeitig vorhandener Beweglichkeit nach außen ab.

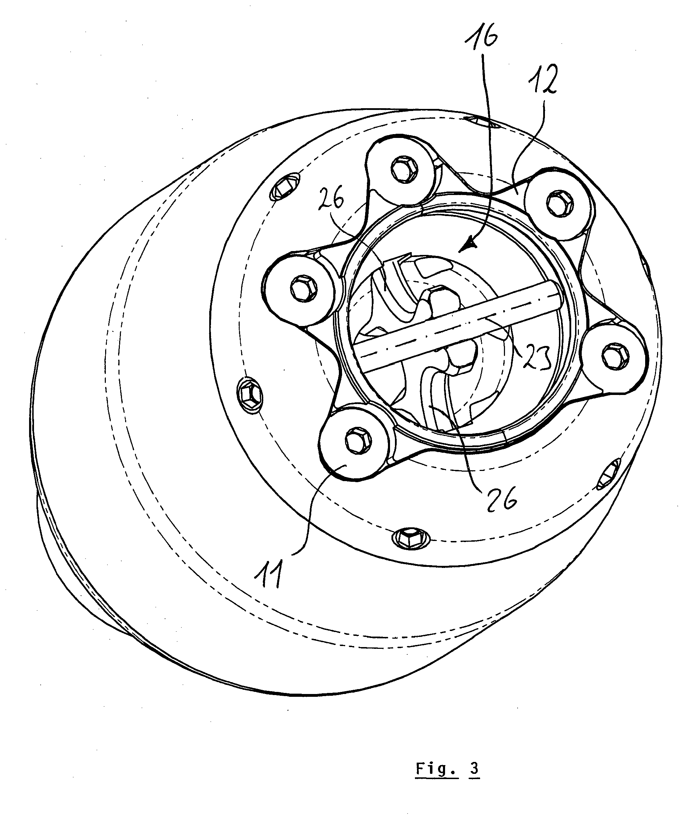

In dem hohlkugelschichtförmigen Teil 9 ist ein Bolzenelement 17 formschlüssig mit einem Halteelement 18 verbunden. Während das Bolzenelement 17 beispielsweise in dem hohlkugelschichtförmigen Halter verpresst ist, ist das Halteelement 18 wie in Fig. 2 ersichtlich in entsprechenden Ausnahmen des Gehäuses 13 aufgenommen. Diese befinden sich bezüglich einer Längsmittelachse 19 des Kanals, die gleichzeitig auch eine Längsachse des Gelenks darstellt (in dessen nichtverschwenktem Zustand) beidseitig dieser Längsachse und somit auf gegenüberliegenden Seiten des Kanals 16. Bei einer Drehung des stromabwärts befindlichen Teils 21 der Drehvorrichtung um die Achse 19 wird über das Halteelement 18 ein Drehmoment gegenüber dem Halter 9 und damit weiter gegenüber dem stromaufwärts befindlichen Teil des Spülschlauchs abgestützt. Hierfür ist das Bolzenelement 17 formschlüssig mit dem Halteelement 18 verbunden, dergestalt, dass die mit ihren innenliegenden Oberflächen zueinander hin gerichteten Teilbereiche 22 mit dem Bolzenelement jeweils eine Verbindungslinie ausbilden, die in der in Fig. 2 gezeigten Darstellung senkrecht aus der Figurenebene herausstehen und parallel zu einer Längsmittelachse 23 des Bolzenelements verlaufen (vgl. Fig. 3). Das Bolzenelement ist zylinderförmig ausgebildet und weist somit eine senkrecht zu seiner Längsachse 23 betrachtet gekrümmte, im vorliegenden Fall kreisförmige Außenkontur auf. Hierdurch wird eine Bewegung bzw. Verschwenkung des Halters 9 um die Achse 23 ermöglicht.

Zusätzlich ist eine Verschwenkung um eine Achse 24 möglich, wodurch das in Richtung senkrecht zur Figurenebene eine geringere Erstreckung als in Richtung der Längsachse 19 aufweisende Halteelement 18 schräg auf das Bolzenelement 17 anstehen kann. Gleichwohl ist eine Überdeckung und weitere Verbindung zwischen Bolzenelement und Halteelement 18 gegeben, so dass weiterhin ein Drehmoment übertragen werden kann. Die Achse 24 steht senkrecht zur Achse 23. Das erfindungsgemäße Gelenk weist somit zwei Freiheitsgerade auf und kann dennoch ein Drehmoment übertragen.

Insbesondere in Fig. 3 sind strömungsoptimierte, gekrümmte Anströmbereiche 26 erkennbar, die zu geringeren Verwirbelungen und zu geringeren Ausbildung von Totwasserbereichen im Strömungskanal führen. Im Bereich der beiden drehmomentübertragenden Teile Bolzen- und Halteelement ist der Strömungskanal in eine Richtung senkrecht zur Längsmittelachse 19 verbreitert, so dass trotz der im Strömungskanal angeordneten Elemente des Gelenks der Einfluss auf die zu transportierende Wassermenge reduziert wird.

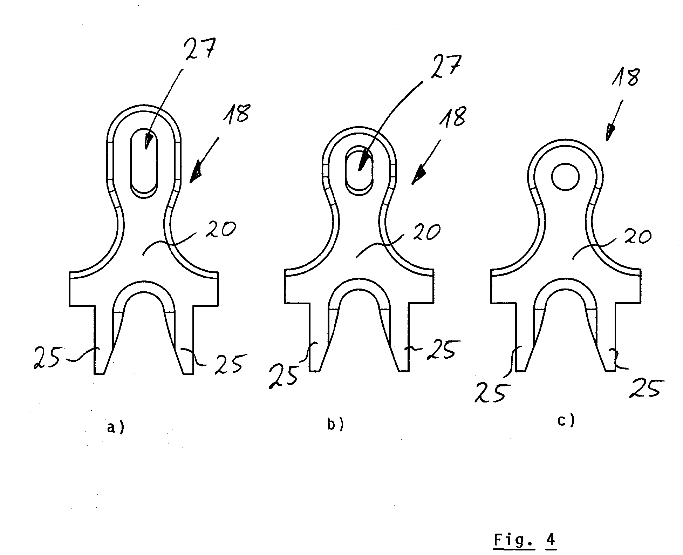

Hierbei ist insbesondere mit den in den Fig. 4 b und c dargestellten Varianten des Halteelements 18 die durchströmbare Querschnittsfläche im Bereich von Halter und Bolzenelement gegenüber den halte- und/oder bolzenelementfreien Strömungskanalbereichen um nicht mehr als 10% verändert.

Das Ausführungsbeispiel eines Halteelements gemäß Fig. 4c führt zu einer Reduzierung der Anzahl der Freiheitsgrade um 1. Ein entsprechendes Gelenk ist insbesondere für eine Spüldüse, wie sie als im Kanal schwebende Spüldüse unter der Bezeichnung "Sehende Nordseedüse" im Markt bekannt ist, einsetzbar. Das entsprechende Gelenk kann lediglich um die Längsachse des Bolzenelements 17 verschwenken.

Die Varianten nach Fig. 4a und 4b hingegen weisen ausreichend große Langlöcher 27 auf, um eine Verschwenkung um die Achse 24 und somit zwei Freiheitsgrade zu gewährleisten. Bei allen Ausführungsbeispielen 4 a) bis c) weist eine Basis 20 Befestigungsbereiche 25 auf. Die gegenüberliegenden langen Seiten des Langlochs bilden die Teilbereiche aus, zwischen deren Oberflächen das Bolzenelement aufgenommen wird.

## Patentansprüche

1. Spülschlauchgelenk zur drehmomentübertragenden, gelenkigen Anbindung eines ein Gehäuse (13) aufweisenden Spülschlauchfunktionselements wie einer Spülschlauchdrehvorrichtung (1) oder einer Spüldüse an einen insbesondere als Spülschlauchflansch ausgebildeten Flansch (2), wobei das Spülschlauchgelenk (7) einen Strömungskanal (16) durch einen beweglich innerhalb des Gehäuses (13) gelagerten hohlkugelschichtförmigen Halter (9) ausbildet, wobei das Spülschlauchgelenk (7) ein Bolzenelement (17) und ein Halteelement (18) aufweist, von denen eines gehäuseseitig und eines flanschseitig festgelegt oder festzulegen ist, **dadurch gekennzeichnet, dass** das Bolzenelement (17) und das Halteelement (18) im Strömungskanal (16) angeordnet sind, wobei das eine der beiden Elemente von Bolzen- oder Halteelement in dem hohlkugelschichtförmigen Halter (9) angeordnet ist, und das Halteelement (18) in Form einer Gabel oder eines Langlochs zwei mit ihren Oberflächen zueinander hingerichtete Teilbereiche (22) aufweist, zwischen denen ein eine Längsachse (23) aufweisender zylinderförmiger Teil des Bolzenelements (17) um dessen Längsachse (23) verschwenkbar dergestalt gelagert ist, dass in der verschwenkten Position zwischen Halte- und Bolzenelement ein Drehmoment übertragbar ist, wobei das Halteelement (18) um eine zwischen den Oberflächen und senkrecht zur Längsachse (23) ausgebildete Schwenkachse (24) schwenkbar ist.

2. Spülschlauchgelenk nach Anspruch 1, **dadurch gekennzeichnet, dass** die Oberflächen Teil einer Innenseite eines Langlochs (27) sind.

3. Spülschlauchgelenk nach einem der Ansprüche 1 oder 2, **dadurch gekennzeichnet, dass** Bolzen- und Halteelement auf jeder Oberflächenseite formschlüssig aneinander liegen und zwei Verbindungslinien ausbilden.

4. Spülschlauchgelenk nach einem der vorherigen Ansprüche, **dadurch gekennzeichnet, dass** das Halteelement (18) eine gehäuse- oder flanschseitig festzulegende Basis (20) mit beidseitig des Strömungskanals festzulegenden Befestigungsbereichen (25) aufweist.

5. Spülschlauchgelenk nach einem der vorherigen Ansprüche, **dadurch gekennzeichnet, dass** das einen Spalt zur Aufnahme des Bolzenelements (17) aufweisende Halteelement (18) gehäuseseitig festgelegt ist.

6. Spülschlauchgelenk nach einem der vorherigen Ansprüche, **dadurch gekennzeichnet, dass** das Halteelement (18) zur Reduzierung einer Verwirbelung des Spülwassers gekrümmte Anströmbereiche (26) aufweist.

7. Spülschlauchgelenk nach einem der vorherigen Ansprüche, **dadurch gekennzeichnet, dass** der Halter (9) mit seiner Außenseite (10) spielbehaftet jedoch zur Übertragung von Zugkräften geeignet in einem korrespondierenden Gelenkgehäuseteil angeordnet ist, an dem das Andere der beiden Elemente von Bolzen- oder Halteelement festgelegt ist.

8. Spülschlauchgelenk nach einem der vorherigen Ansprüche, **dadurch gekennzeichnet, dass** sich der Strömungskanal (16) im Bereich von Bolzen- und Halteelement quer zur Hauptströmungsrichtung (A) betrachtet verbreitert.

9. Spülschlauchgelenk nach einem der vorherigen Ansprüche, **dadurch gekennzeichnet, dass** der Strömungskanal (16) quer zu seiner Längsachse (19) betrachtet eine durchströmbare Querschnittsfläche aufweist, die sich im Bereich von Halte- und/oder Bolzenelement gegenüber den halte- und/oder bolzenelementfreien Strömungskanalbereichen um nicht mehr als 10 % ändert.

10. Spülschlauchdrehvorrichtung umfassend ein Spülschlauchgelenk nach einem der vorherigen Ansprüche.

11. Spüldüse umfassend ein Spülschlauchgelenk nach einem der Ansprüche 1 bis 9.

## Claims

1. A flushing hose joint for torque-transmitting flexible connection of a flushing hose function element having a housing (13), such as a flushing hose rotation device (1) or a flushing head, to a flange (2) particularly configured as a flushing hose flange, wherein the flushing hose joint (7) forms a flow channel (16) through a hollow spherical layer shaped holder (9) which is movably mounted within the housing (13), wherein the flushing hose joint (7) comprises a bolt member (17) and a holding member (18), one of which being fastened or fastenable on the housing side and one of which being fastened or fastenable on the flange side, **characterized in that** the bolt member (17) and the holding member (18) are disposed in the flow channel (16), wherein one of the bolt and holding members is disposed in the hollow spherical layer shaped holder (9) and the holding member (18) in the shape of a fork or an oblong hole has two partial areas (22) whose surfaces are facing one another, between which surfaces a cylindrical part of the bolt member (17) having a longitudinal axis (23) is mounted for pivoting about its longitudinal axis (23), such that, in the pivoted position, a torque can be transmitted between the bolt and holding members, wherein the holding member (18) can be pivoted about a pivot axis (24) formed between said surfaces and extending perpendicular to the longitudinal axis (23).

2. The flushing hose joint according to claim 1, **characterized in that** the surfaces are part of an inner side of an oblong hole (27) .

3. The flushing hose joint according to any one of claims 1 or 2, **characterized in that** the bolt and holding members form abut on each surface side in a form-fitting manner and form two connecting lines.

4. The flushing hose joint according to any one of the preceding claims, **characterized in that** the holding member (18) comprises a base (20) to be fastened on the housing side or flange side with fastening areas (25) on both sides of the flow channel.

5. The flushing hose joint according to any one of the preceding claims, **characterized in that** the holding member (18) having a gap for receiving the bolt member (17) is fastened on the housing side.

6. The flushing hose joint according to any one of the preceding claims, **characterized in that** the holding member (18) has curved inlet areas (26) to reduce swirling of the flushing water.

7. The flushing hose joint according to any one of the preceding claims, **characterized in that** the outer side (10) of the holder (9) has a clearance but is suitably disposed for transmitting tensile forces in a corresponding joint housing part to which the other of the bolt and holding members is fastened.

8. The flushing hose joint according to any one of the preceding claims, **characterized in that** the flow channel (16) widens in the area of the bolt and holding members viewed transversely to the main flow direction (A).

9. The flushing hose joint according to any one of the preceding claims, **characterized in that** the flow channel (16) has a cross sectional area through which the flow can pass viewed transversely to its longitudinal axis (19), which cross section changes by not more than 10% in the area of the holding and/or bolt members compared to the flow channel areas that are free of holding and/or bolt members.

10. A flushing hose rotation device comprising a flushing hose joint according to any one of the preceding claims.

11. A flushing head comprising a flushing hose joint according to any one of claims 1 to 9.

## Revendications

1. Joint de rinçage pour la liaison articulée, transmettant le couple d'un élément fonctionnel de rinçage présentant un boîtier (13) comme une tête de rinçage (1) ou un dispositif de rinçage avec une bride (2) réalisée en particulier comme bride de rinçage, dans lequel le joint de rinçage (7) réalise un canal d'écoulement (16) par un support (9) en forme de couche sphérique creuse logé de manière mobile à l'intérieur du boîtier (13), dans lequel le joint de rinçage (7) présente un élément de boulon (17) et un élément de retenue (18), dont un est fixé ou est à fixer côté boîtier et un côté bride, **caractérisé en ce que** l'élément de boulon (17) et l'élément de retenue (18) sont agencés dans le canal d'écoulement (16), dans lequel l'un des deux éléments de l'élément de boulon ou de l'élément de retenue est agencé dans le support (9) en forme de couche sphérique creuse, et l'élément de retenue (18) sous la forme d'une fourche ou d'un trou oblong présente deux zones partielles (22) dirigées avec leurs surfaces l'une vers l'autre, entre lesquelles une partie cylindrique présentant un axe longitudinal (23) de l'élément de boulon (17) est logée de manière pivotante autour de son axe longitudinal (23) de telle manière que dans la position pivotée entre l'élément de retenue et l'élément de boulon un couple puisse être transmis, dans lequel l'élément de retenue (18) peut être pivoté autour d'un axe de pivotement (24) réalisé entre les surfaces et perpendiculairement à l'axe longitudinal (23).

2. Joint de rinçage selon la revendication 1, **caractérisé en ce que** les surfaces font partie d'un côté intérieur d'un trou oblong (27).

3. Joint de rinçage selon l'une des revendications 1 ou 2, **caractérisé en ce que** l'élément de boulon et l'élément de retenue reposent par complémentarité de formes l'un contre l'autre sur chaque côté de surface et réalisent deux lignes de liaison.

4. Joint de rinçage selon l'une des revendications précédentes, **caractérisé en ce que** l'élément de retenue (18) présente une base (20) à fixer côté boîtier ou bride avec des zones de fixation (25) à fixer des deux côtés du canal d'écoulement.

5. Joint de rinçage selon l'une des revendications précédentes, **caractérisé en ce que** l'élément de retenue (18) présentant une fente pour la réception de l'élément de boulon (17) est fixé côté boîtier.

6. Joint de rinçage selon l'une des revendications précédentes, **caractérisé en ce que** l'élément de retenue (18) présente des zones d'afflux (26) incurvées pour la réduction d'un tourbillonnement de l'eau de rinçage.

7. Joint de rinçage selon l'une des revendications précédentes, **caractérisé en ce que** le support (9) avec son côté extérieur (10) est toutefois approprié avec jeu à la transmission de forces de traction, est agencé dans une partie de boîtier de joint correspondante, à laquelle l'autre des deux éléments de l'élément de boulon ou de l'élément retenue est fixé.

8. Joint de rinçage selon l'une des revendications précédentes, **caractérisé en ce que** le canal d'écoulement (16) s'élargit dans la zone de l'élément de boulon et de l'élément de retenue, considéré transversalement au sens d'écoulement principal (A).

9. Joint de rinçage selon l'une des revendications précédentes, **caractérisé en ce que** le canal d'écoulement (16) présente, considéré transversalement à son axe longitudinal (19) une superficie de section pouvant être traversée qui se modifie dans la zone de l'élément de retenue et/ou de boulon par rapport aux zones de canal d'écoulement sans élément de retenue et/ou élément de boulon de pas plus de 10 %.

10. Tête de rinçage comprenant un joint de rinçage selon l'une des revendications précédentes.

11. Dispositif de rinçage comprenant un joint de rinçage selon l'une des revendications 1 à 9.
